# EUROPEAN PATENT APPLICATION

(11) **EP 0 622 679 A1**
(43) Date of publication of application: **02.11.1994**
(21) Application number: 94103076.9
(22) Date of filing: 02.03.1994
(51) Int. Cl.: G03D 15/00, G03B 17/24

(54) **Photographic processing method**

(30) Priority: 25.03.1993 JP 66469/93
(71) Applicant: NORITSU KOKI CO. LTD., Wakayama-shi, Wakayama-ken 640 (JP)
(72) Inventor: Ishikawa, Masazumi, Wakayama-shi, Wakayama-ken (JP); Tanibata, Toru, Wakayama-shi, Wakayama-ken (JP)
(74) Representative: Türk, Gille, Hrabal, Leifert

(57) **Abstract**

There is provided a photographic processing method for developing a film (5) having been photographed and accommodated in a cartridge (10) and set at a predetermined position of a photographic processing apparatus, printing the developed film (5) on a photographic paper (6) and developing the photographic paper. The method including the steps of: (a) providing in advance the film (5) with an ID number for identifying the film; (b) reading out the ID number of the film (5); and (c) providing the ID number of the film to a side of the photographic paper (6) opposite to a side thereof on which an image of the film is printed. This method enables one to easily specify in which film and in which frame of the film an image desired to be extra-printed is present.

## Description

The present invention relates to photographic processing methods. More particularly, it relates to a photographic processing method by which one is able to easily find in which film and in which frame of the film an image of a photographic print to be extra-printed is present by merely viewing the reverse side of the print.

Conventionally, a developed film is divided into some pieces and stored in a film sheet. Users can know contents of the film stored in the film sheet by checking prints, to which the film is printed, one by one, or by holding the film directly to the light.

Recently, if a film is subjected to simultaneous printing which performs development of a film and printing of the developed film at a time, there are some cases where each print of the film shows the corresponding frame number on the reverse side thereof.

However, brightness and hue of the developed film is reverse of those of the printed photographic paper so that users cannot easily know images of negatives, especially for colour photograph. When users wish to make extra prints, therefore, it takes much time for them to know the specific image and is difficult to distinguish the specific image among the other images if images similar to the specific image exist in the film. Consequently, wrong film numbers might be selected for extra prints.

Further, where many films are deposited at a time for simultaneous printing, even if they are returned to the customer together with their photographic prints each showing the corresponding frame number on the reverse side thereof and sorted for each of the films, enjoying the prints by many people or arranging them on an album would lead to a difficulty in identifying each print with its corresponding film. This results in the aforementioned problem that one has to hold the film directly to the light for collation between the prints and the films.

Still further, in case that a developed film is stored in a film sheet, a problem arises that not only time and labor are needed to cut the film into pieces but also the operations for extra-printing the film are rendered troublesome since the film is divided into some pieces. In addition, a film being stored in the film sheet is likely to be folded. Furthermore, a used cartridge is not reused and hence must be disposed of.

In view of the foregoing circumstances, it is an object of the present invention to provide a photographic processing method by which one is able to easily specify in which film and in which frame of the film an image to be extra-printed is present.

It is another object of the present invention to provide a photographic processing method capable of reducing time and labor needed for extra-printing a film while preventing the film from being folded during storage.

According to one aspect of the present invention, there is provided a photographic processing method for developing a film having been photographed, printing the developed film on a photographic paper and developing the photographic paper, the film being accommodated in a cartridge and set at a predetermined position of a photographic processing apparatus, the method comprising the steps of:
(a) providing in advance the film with an ID number for identifying the film;
(b) reading out the ID number of the film; and
(c) providing the ID number of the film to a side of the photographic paper opposite to a side thereof on which an image of the film is printed.

According to another aspect of the present invention, there is provided a photographic processing method for developing a film having been photographed, printing the developed film on a photographic paper and developing the photographic paper, the film being accommodated in a cartridge and set at a predetermined position of a photographic processing apparatus, the method comprising the steps of:
(a) providing in advance the film and the cartridge accommodating the film with an ID number for identifying the film;
(b) reading out the ID number of the film from the cartridge; and
(c) providing the ID number read out from the cartridge to a side of the photographic paper opposite to a side thereof on which an image of the film is printed.

According to yet another aspect of the present invention, there is provided a photographic processing method for developing a film having been photographed, printing the developed film on a photographic paper and developing the photographic paper, the film being accommodated in a cartridge and set at a predetermined position of a photographic processing apparatus, the method comprising the steps of:
(a) winding the film having been finished with printing into a cartridge; and
(b) providing a same ID number to a side of the photographic paper opposite to a side thereof on which an image of the film is printed and to the cartridge into which the film is wound.

According to still yet another aspect of the present invention, there is provided a photographic processing method for developing a film having been photographed, printing the developed film on a photographic paper and developing the photographic paper, the film being accommodated in a cartridge and set at a predetermined position of a photographic processing apparatus, the method comprising the steps of:
(a) cutting the film having been finished with printing into several pieces and storing them within a film sheet; and
(b) providing a same ID number to a side of the photographic paper opposite to a side thereof on which an image of the film is printed and to the film sheet.

In the photographic processing method of the present invention, the photographic paper printed with an image of the film (photographic print) is provided with the same ID number as provided to the film. This allows one to easily specify which film the photographic print should be identified with.

The ID number for identification of the film is read out from the film directly or from the cartridge provided with that ID number.

Easy identification of the photographic print with the film is also achieved even if the film having been finished with printing is wound into a cartridge and a same ID number is provided to both that cartridge and the photographic print.

The same is true if the film having been finished with printing is stored within the film sheet and a same ID number is provided to both the film sheet and the photographic print.
Fig. 1 is a schematic explanatory view of an embodiment of a photographic processing method according to the present invention;
Fig. 2 is an explanatory view of an example of a back print according to the present invention;
Fig. 3 is an explanatory view of an example of a cartridge for use in the present invention;
Fig. 4 is an explanatory view of an example of a film sheet for use in the present invention;
Fig. 5 is an explanatory section of a cartridge for showing the internal structure thereof;
Fig. 6 is an explanatory view showing the relationship between a cartridge and a motor;
Fig. 7 is an explanatory view showing a spool connected to a coupling;
Fig. 8 is a control block diagram of a photographic processing method according to the present invention; and
Fig. 9 is a control flowchart of a photographic processing method according to the present invention.

A photographic processing method according to the present invention will now be described in detail with reference to the attached drawings.

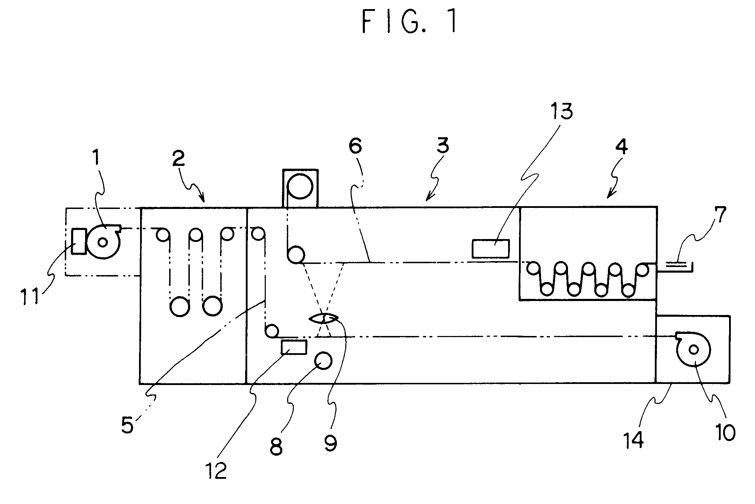

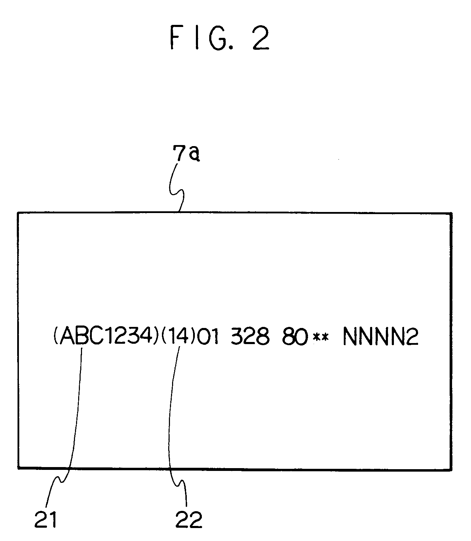

Referring to Fig. 1, denoted by numeral 2 is a film developing part, by numeral 3 a printing part, and by numeral 4 a photographic paper developing part, each of which can employ a conventionally used arrangement. The present invention differs from the prior art in that a photographic print 7 is provided on its reverse side 7a with a same ID number 21 as provided to a corresponding film as shown in Fig. 2 by the use of a photographic processing apparatus including an ID number reader 12 adapted to read an ID number given to a film or an ID number reader 11 adapted to read an ID number given to a cartridge, and a back print device 13.

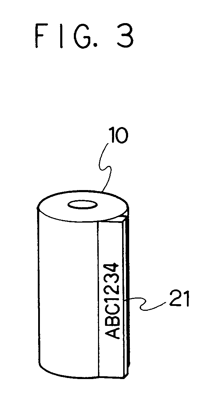

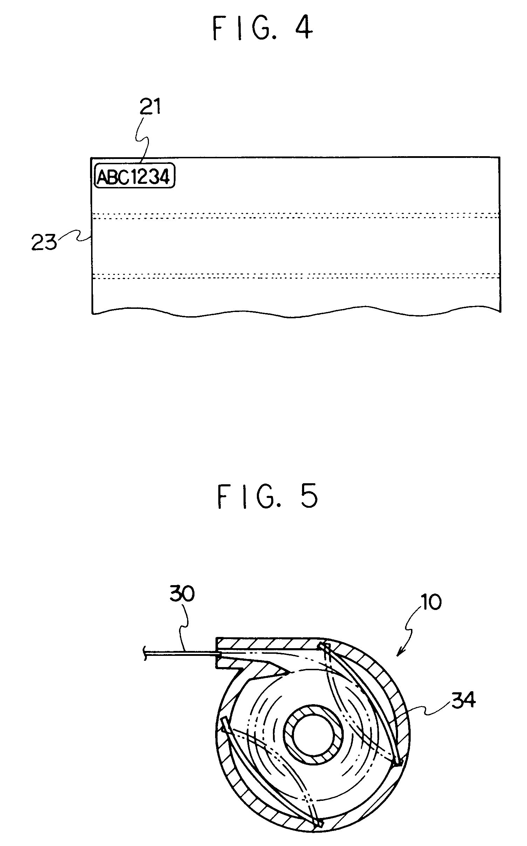

Where the photographic processing apparatus includes a film-winding part 14, a cartridge 10 is provided with the same ID number 21 as provided to a film 5 which is accommodated therein as shown in Fig. 3, thereby assuring the correspondence between the ID number 21 of the cartridge 10 and that shown on the reverse side 7a of the photographic print 7 shown in Fig. 2. Alternatively, where the film 5 is cut into several pieces to be stored in a film sheet 23 shown in Fig. 4 in a manner similar to the conventional one, the film sheet 23 might be provided with the same ID number 21 as given to the film 5. In this case the cartridge and the film sheet are each provided with the ID number by affixing thereto a label indicating the ID number or directly printing the ID number thereon.

To be described first is a photographic processing method according to the present invention which is adapted to read out an ID number previsouly provided to a film, then give the ID number thus read to the reverse side of a photographic paper for assuring the correspondence between the film and the photographic print. In this case the ID number reader 11 shown in Fig. 1 is unnecessary.

First, a cartridge 1 accommodating a photographed film 5 is set at a predetermined position of the photographic apparatus. The film 5 drawn out of the cartridge 1 is developed, then printed according to a common procedure, while the ID number reader 12 reads out an ID number provided to the film 5. In Fig. 1 numerals 8, 9 and 6 denote a light source, a lens and a photographic paper, respectively. On the other hand, the back print device 13 numbers the ID number read out by the ID number reader 12 on the reverse side of the photographic paper 6 which is exposed for a sequence of images of the film 5. As shown in Fig. 2 the photographic paper 6 might be numbered with the ID number 21 accompanied by a frame number 22. The provision of the ID number can be achieved by a well-known technique using an ink ribbon or ink jet. After printing, the photographic paper 6 is subjected to a developing treatment in the photographic paper developing part 4, separated image by image by means of an appropriate cutting means (not shown) and ejected as photographic prints 7 from the apparatus.

In the photographic method described above, where there is used the cartridge 1 previously numbered with the same ID number as provided to the film accommodated therein, the ID number reader 11 shown in Fig. 1 serves to read out the ID number on the cartridge 1 which is then given to the reverse side of the photographic paper 6 by the back print device 13, thereby assuring the correspondence between the film 5 and the photographic prints 7. In this case the ID number reader 12 is unnecessary.

It is to be noted that the term "ID number" is of a broad concept including alphabetic characters, symbols such as asterisk, and a bar code as well as numerals, and that the number of such characters or symbols is not particularly limited herein. In addition, the ID number might be recorded as magnetic information on the cartridge and the film.

Thus, one can easily specify which film a photographic print should be identified with by merely collating the ID number exhibited on the reverse side of the photographic print with that on the film.

It should be understood that although in the foregoing example an ID number is provided to the photographed film or both the photographed film and the cartridge accommodating the same or both the photographed film and the film sheet for storing the same as well as to the photographic prints of the film so as to clarify the correspondence between the film and its corresponding photographic prints, it is also possible to clarify such correspondence by providing the cartridge accommodating the film or the film sheet with the same ID number as exhibited on the photographic prints even if the film is not provided with the ID number. In this case there is needed, instead of the ID number readers 11 and 12, an ID numberer connected to the back print device 13 for providing the cartridge or the film sheet with the same ID number as exhibited on the photographic prints originating from the film accommodated in the cartridge or stored in the film sheet.

To be described next is a photographic processing method adapted to wind and store a film having been finished with printing in a cartridge.

As described above, the film 5 having been printed on the photographic paper is wound into the cartridge 10. It is preferable to use as the cartridge 10 the cartridge which has been initially set in the photographic processing system and from which the film has been completely drawn out. Nevertheless, another cartridge is usable therefor.

Fig. 5 is an explanatory section of the cartridge 10 for showing the internal structure thereof. The film having been developed and printed is conveyed along a conveyer guide (not shown) and led into the cartridge 10 along a film guide 30 disposed adjacent an inlet of the cartridge 10.

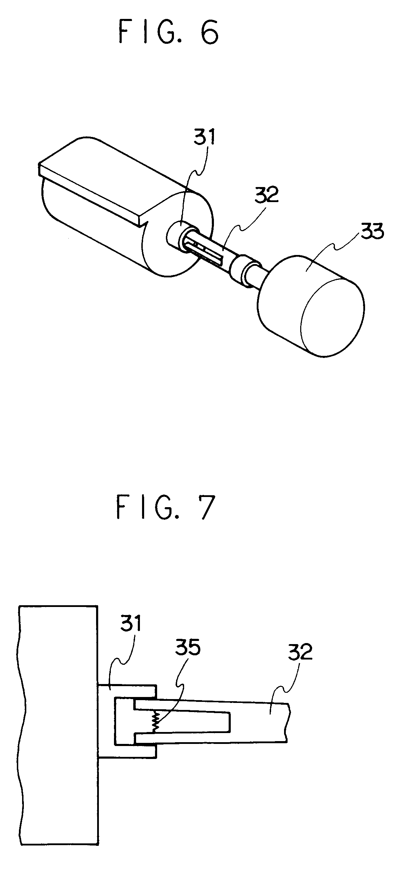

When the leading end of the film enters the cartridge 10, a motor 33 connected to a spool 31 of the cartridge 10 through a coupling 32 is actuated to rotate the spool 31 for rolling up the film as shown in Fig. 6. In this case a plate spring 34 provided in the cartridge 10 serves to urge the film against the spool 31, so that the film is assuredly wound by the rotation of the spool 31. Note that in Fig. 5 the plate spring 34 in a condition where the film is absent in the cartridge 10 is drawn in chain double-dashed line. As can be seen from Fig. 5, the plate spring 34 is disposed so as to press the film against the spool 31. As shown in Fig. 7, the coupling 32 forks into two branches toward the cartridge 10, and a spring 35 is provided between the two branches to urge them in such a direction as to enlarge the space therebetween. This urging force of the spring 35 permits the coupling 32 to connect to the spool 31 and, hence, the rotating force of the motor 33 is transmitted to the spool 31.

After printing is completed, the film might be stored in a film sheet 23 conventionally used (to which is given the ID number by affixing thereto a label on which the ID number is printed or by printing the ID number thereon) instead of being wound in the cartridge, as shown in Fig. 4. Nevertheless, the latter, or wind the film into the cartridge, will be advantageous over the former in that:
(1) a film sheet, which is expendable, can be dispensed with;
(2) a cartridge can be utilized again as it is;
(3) a film cutter can be dispensed with;
(4) time and labor can be lessened for extra-printing since the film is not cut into pieces;
(5) a film will never be folded during storage; and the like.

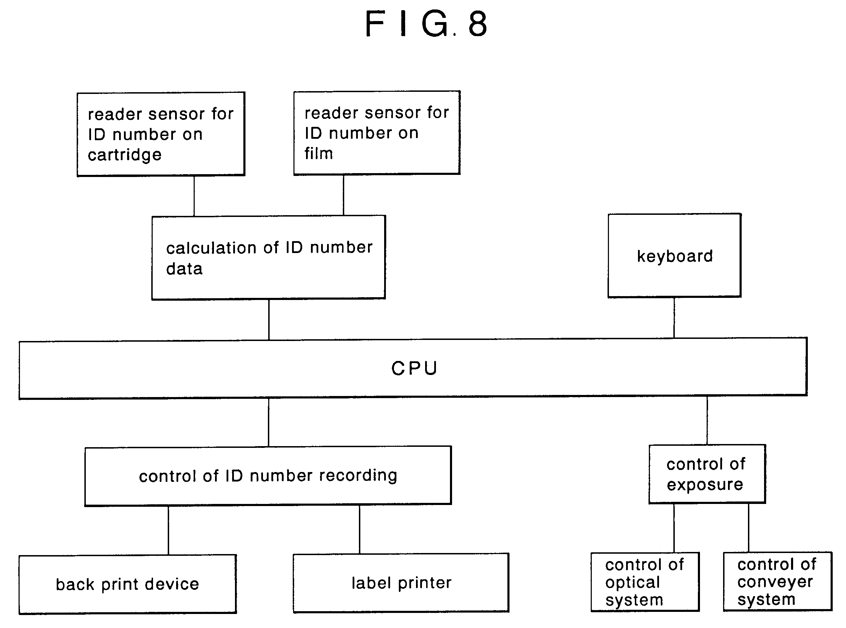

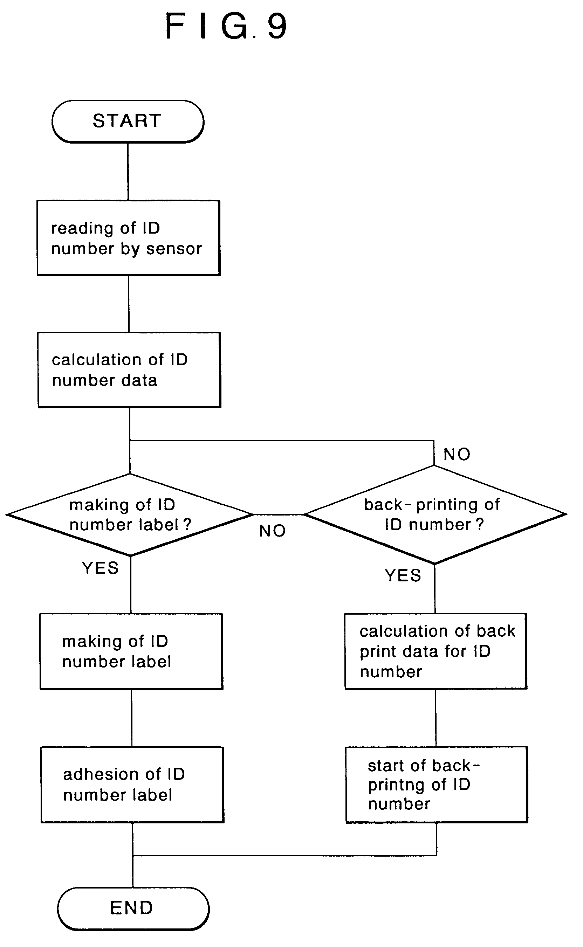

Figs. 8 and 9 are respectively a control block diagram and a control flowchart for controlling the aforementioned photographic processing method.

As shown in Fig. 8, the ID number shown on the cartridge or film is read out by a reader sensor, then ID number data is calculated from the ID number at CPU. Otherwise, where the film is not provided with the ID number, any ID number is input through a keyboard to be showed on the reverse side of the photographic print as well as on the cartridge or film sheet. The ID number together with a frame number is printed on the reverse side of the photographic print by the back print device, while at the same time a label indicating the ID number is made by a label printer. In order to achieve exposure, there are controlled the optical system components such as a light-regulating filter and a shutter and the conveyer system such as a roller unit for conveying the photographic paper.

Fig. 9 shows a process of making a label indicating the ID number read out by the sensor and affixing it onto the cartridge adapted to wind the film or of printing the ID number directly onto the cartridge by exposure or using a printer.

Thus, one can easily specify which film a photographic print should be identified with if collating an ID number shown on the photographic print with one shown on a cartridge or film sheet storing the corresponding film.

As has been described, according to the photographic processing method of the present invention the provision of an ID number for identification of a film to the reverse side of a photographic print enables one to easily specify which film any photographic print should be identified with.

In addition, if the ID number is provided together with a frame number which is conventionally used, one is also able to specify to which frame of the film any photographic print corresponds.

While only certain presently preferred embodiments have been described in detail, as will be apparent with those familiar with the art, certain changes and modifications can be made without departing from the spirit and scope of the invention as defined by the following claims.

## Claims

1. A photographic processing method for developing a film having been photographed, printing the developed film on a photographic paper and developing the photographic paper, the film being accommodated in a cartridge and set at a predetermined position of a photographic processing apparatus, the method comprising the steps of:
(a) providing in advance the film with an ID number for identifying the film;
(b) reading out the ID number of the film; and
(c) providing the ID number of the film to a side of the photographic paper opposite to a side thereof on which an image of the film is printed.

2. A photographic processing method for developing a film having been photographed, printing the developed film on a photographic paper and developing the photographic paper, the film being accommodated in a cartridge and set at a predetermined position of a photographic processing apparatus, the method comprising the steps of:
(a) providing in advance the film and the cartridge accommodating the film with an ID number for identifying the film;
(b) reading out the ID number of the film from the cartridge; and
(c) providing the ID number read out from the cartridge to a side of the photographic paper opposite to a side thereof on which an image of the film is printed.

3. A photographic processing method for developing a film having been photographed, printing the developed film on a photographic paper and developing the photographic paper, the film being accommodated in a cartridge and set at a predetermined position of a photographic processing apparatus, the method comprising the steps of:
(a) winding the film having been finished with printing into a cartridge; and
(b) providing a same ID number to a side of the photographic paper opposite to a side thereof on which an image of the film is printed and to the cartridge into which the film is wound.

4. A photographic processing method for developing a film having been photographed, printing the developed film on a photographic paper and developing the photographic paper, the film being accommodated in a cartridge and set at a predetermined position of a photographic processing apparatus, the method comprising the steps of:
(a) cutting the film having been finished with printing into several pieces and storing them within a film sheet; and
(b) providing a same ID number to a side of the photographic paper opposite to a side thereof on which an image of the film is printed and to the film sheet.
